# EUROPÄISCHE PATENTSCHRIFT

(11) **EP 1 140 560 B1**
(45) Veröffentlichungstag und Bekanntmachung des Hinweises auf die Patenterteilung: **08.10.2008**
(21) Anmeldenummer: 00969262.5
(22) Anmeldetag: 18.09.2000
(51) Int. Cl.: B60R 1/00

(54) **VERFAHREN UND VORRICHTUNG ZUR OPTISCHEN ERFASSUNG EINES SEGMENTS EINES VERKEHRSRAUMS EINES KRAFTFAHRZEUGES**
METHOD AND DEVICE FOR OPTICALLY DETECTING A SEGMENT OF A DRIVING AREA OF A MOTOR VEHICLE
PROCEDE ET DISPOSITIF DE DETECTION OPTIQUE D'UN SEGMENT D'ESPACE DE CIRCULATION D'UNE AUTOMOBILE

(30) Priorität: 14.10.1999 DE 19949496
(43) Veröffentlichungstag der Anmeldung: 10.10.2001
(73) Patentinhaber: Volkswagen Aktiengesellschaft, 38436 Wolfsburg (DE)
(72) Erfinder: ZANDER, André, 38820 Halberstadt (DE)
(86) Internationale Anmeldenummer: PCT/EP2000/009094
(87) Internationale Veröffentlichungsnummer: WO 2001/026929

(56) Entgegenhaltungen:
- PATENT ABSTRACTS OF JAPAN vol. 008, no. 234 (M-334), 26. Oktober 1984 (1984-10-26) & JP 59 114139 A (NAIRUSU BUHIN KK), 2. Juli 1984 (1984-07-02)

## Beschreibung

Die Erfindung betrifft ein Verfahren und eine Vorrichtung zur Überwachung eines Segments eines Verkehrsraums eines Fahrzeugs, bei dem von einem optischen Sensor das zu überwachende Segment des Verkehrsraums erfaßt und ein die optische Information repräsentierendes Sensorsignal erzeugt und zu einer Auswerteeinrichtung geleitet wird, bei dem die Auswerteeinrichtung ein Steuersignal für eine Monitoreinrichtung des Fahrzeugs erzeugt und dieses zur Monitoreinrichtung geleitet wird, und bei dem auf einer Darstellungsfläche der Monitoreinrichtung eine flächenhafte Darstellung der vom optischen Sensor gelieferten Information durchgeführt wird.

Ein derartiges Verfahren zur Überwachung eines Segments eines Verkehrsraums, insbesondere zur Erfassung und Wiedergabe eines rückwärtigen Verkehrsraums oder einer Umfeldüberwachung des Kraftfahrzeuges sind bekannt. Hierbei ist vorgesehen, daß der zu überwachende Teil des Verkehrsraums von einem optischen Sensor, insbesondere von einer Videoeinrichtung, erfaßt wird, und das von dieser Videoeinrichtung gelieferte Bild auf einem im Inneren des Kraftfahrzeugs befindlichen, Insbesondere im Blickfeld des Fahrzeuglenkers angeordneten Monitor dargestellt wird.

Die bekannten Verfahren sowie die zur Ausführung dieser Verfahren benutzten Vorrichtungen besitzen den Nachteil, daß die meisten optischen Sensoren und/oder die meisten Wiedergebegeräte es nicht gestatten, eine die räumliche Tiefe des überwachten Segments des Verkehrsraums realitätsgetreu reproduzierende Bildinformation zu vermitteln. Es ist daher z. B, für einen Betrachter nur schwer möglich, aus der auf dem Fahrzeugmonitor angezeigten Bilddarstellung den Abstand eines sich dem Fahrzeug von hinten nähernden anderen Fahrzeugs abzuschätzen.

Ein Verfahren nach dem Oberbegriff des Anspruchs 1 Ist aus der JP 59114 139 A bekannt.

Es ist die Aufgabe der vorliegenden Erfindung, ein Verfahren und eine Vorrichtung der eingangs genannten Art derart weiterzubilden, daß hierdurch einem Fahrzeuginsassen ermöglicht wird, den räumlichen Abstand von Objekten des erfaßten Verkehrsraums besser abzuschätzen.

Bei dem erfindungsgemäßen Verfahren wird mittels eines Abstandssensors der Abstand zu mindestens einem Objekt des überwachten Segments des Verkehrsraums ermittelt und ein diese Abstandsinformation charakterisierendes Sensorsignal zur Auswerteeinrichtung geleitet. Durch die Auswerteeinrichtung wird aus diesem Sensorsignal ein die Abstandsinformation repräsentierendes Steuersignal erzeugt und zu mindestens einer Anzeigeeinrichtung geleitet. Das erfindungsgemäße Verfahren ist dadurch gekennzeichnet, daß die oder eine der Anzeigeeinrichtung(en), der das die Abstandsinformation repräsentierende Steuersignal zugeleitet wird, eine weitere optische oder eine akustische Signalquelle ist.

Durch das erfindungsgemäße Verfahren wird in vorteilhafter Art und Weise eine für eine dreidimensionale Überwachung des von der optischen Sensoreinrichtung erfaßten Segments des Verkehrsraums besonders geeignetes Verfahren geschaffen, die dem Insassen eines entsprechend ausgestatteten Kraftfahrzeugs nicht nur eine flächenhafte Darstellung des im überwachten Verkehrsraums ablaufenden Verkehrsgeschehens, sondern auch zusätzlich zu dieser zweidimensionalen Wiedergabe auch noch eine Abstandsinformation Ober mindestens ein sich im überwachten Verkehrsraum befindliches Objekt liefert. Durch die erfindungsgemäß vorgesehene Entfernungsbestimmung von Objekten, die von dem optischen Sensor erfaßt werden, wird in vorteilhafter Art und Weise erreicht, daß der Fahrzeuginsasse umfassend über das Verkehrsgeschehen in dem von dem optischen Sensor erfaßten Verkehrsraum informiert wird.

Eine vorteilhafte Weiterbildung der Erfindung sieht vor, daß als Zusätzliche Anzeigeeinrichtung die Monitoreinrichtung verwendet wird, und daß auf einer Darstellungsfläche der Monitoreinrichtung ein Abstandswert zur Anzeige gebracht wird. Eine derartige Maßnahme besitzt den Vorteil, daß, hierdurch dem Betrachter der Monitoreinrichtung unmittelbar der relevante Abstand angezeigt wird.

Eine weitere vorteilhafte Weiterbildung der Erfindung sieht vor, daß als Anzeigeeinrichtung ferner eine monitorexteme optische Signalquelle oder eine akustische Signalquelle verwendet wird.

Eine weitere vorteilhafte Weiterbildung der Erfindung sieht vor, daß durch die Anzeigeeinrichtung ein Warnsignal zur Anzeige gebracht wird, wenn ein vorbestimmter Mindestabstand unterschritten wird.

Eine weitere vorteilhafte Weiterbildung der Erfindung sieht vor, daß die Abstandsmessung durch ein optisches Verfahren, insbesondere durch eine geometrische Bildauswertung der vom optischen Sensor gelieferten Bildinformation, durchgeführt wird. Eine derartige Maßnahme besitzt den Vorteil, daß sowohl zur optischen als auch zur Abstandssensierung eine Erfassungseinheit des optischen Sensors verwendbar ist. In vorteilhafter Art und Weise können dann beide Sensoren in einem einzigen Modul integriert sein. Dies führt in vorteilhafter Art und Weise zu einer kostengünstige Herstellbarkeit der erfindungsgemäßen Vorrichtung.

Eine weitere vorteilhafte Weiterbildung der Erfindung sieht vor, daß zur Abstandsmessung durch den Abstandssensor eine Laufzeitmessung von vom Abstandssensor ausgesandten Signalen oder ein Triangulationsverfahren verwendet wird, oder daß die Abstandsmessungen mittels Mikrowellen, insbesondere Radar, Infrarot oder Ultraschall erfolg.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
Figur 1 eine schematische Darstellung eines Ausführungsbeispielis, und
Figur 2 ein Blockdiagramm eines Autoführungsbeispiels einer Vorrichtung zur Durchführung des Verfahrens.

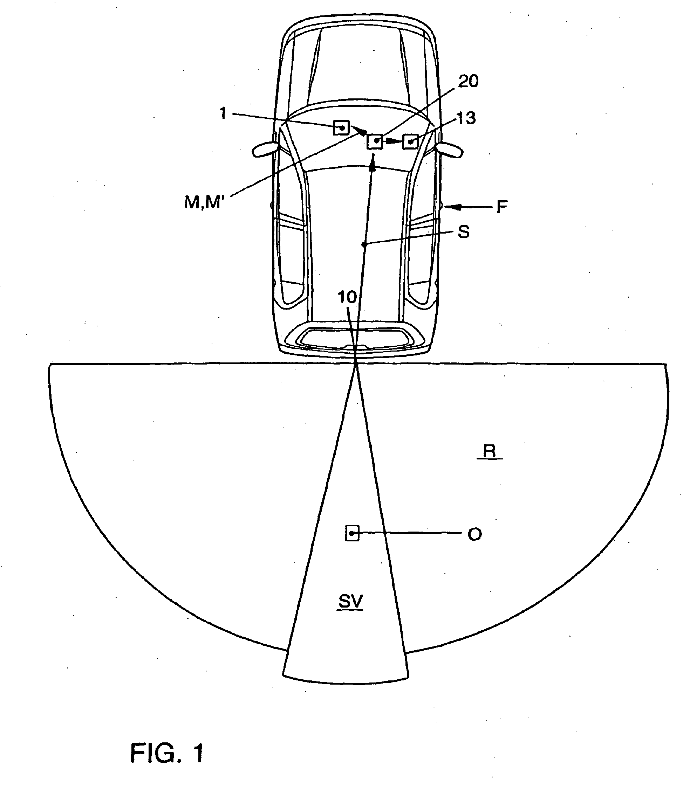

In Figur 1 ist ein allgemein mit F bezeichnetes Fahrzeug dargestellt, welches an seinem Heck eine Sensorvonichtung 10 aufweist, durch die ein Segment SV des rückwärtigen Verkehrsraums R des Fahrzeugs F erfaßbar Ist. Dem Fachmann ist bewußt, daß die Größe des gezeigten Segments SV des hinteren Verkehrsraums R des Fahrzeugs F nur exemplarischen Charakter besitzt. Es ist vielmehr möglich, daß von der Sensorvorrichtung 10 ein kleineres oder ein größeres Raumsegment als das in Figur 1 dargestellte überwacht wird. Ebenso ist es möglich, daß nicht nur der rückwärtige Verkehrsraum R, sondern auch der vordere oder der seitliche Verkehrsraum durch eine entsprechende (Mehrfach-) Anordnung von Sensoreinrichtungen 10 erfaßt wird.

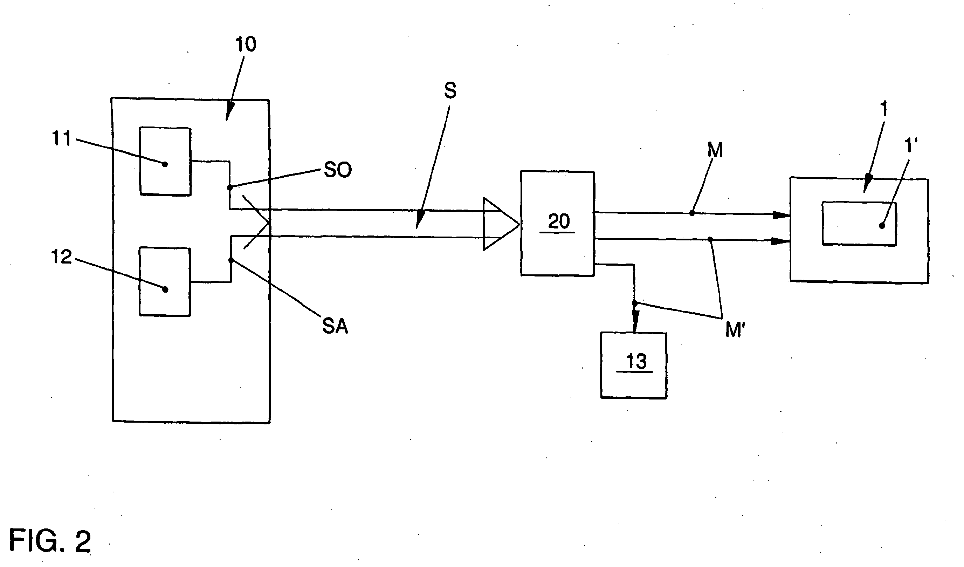

Das von der Sensoreinrichtung 10 erzeugte Sensorsignal S wird - wie anhand der Figur 2 erläutert werden wird - zu einer Monitoreinrichtung 1 des Fahrzeugs F geleitet, auf der die vom Sensorsignal S repräsentierten Informationen darstellbar sind.

Wie am besten aus Figur 2 ersichtlich ist, beinhaltet die Sensoreinrichtung 10 einen optischen Sensor 11, durch den das von der Sensoreinrichtung 10 erfaßte Segment SV des Verkehrsraums R optisch erfaßbar und eine diese optische Information repräsentierende Signalkomponente SO eines von der Sensoreinrichtung 10 generierten Sensorsignals S erzeugbar ist. Desweiteren weist die Sensoreinrichtung 10 einen Abstandssensor 12 auf, durch den der Abstand zu mindestens einem sich im überwachten Segment SV des Verkehrsraums R befindlichen Objekts O bestimmbar ist. Die die optische Information repräsentierende Signalkomponente SO und eine diese Abstandsinformation belnhaltende Signalkomponente SA des Sensorsignals S der Sensoreinrichtung 10 werden nun zu einer Auswerteeinrichtung 20 geleitet. Diese erzeugt aus dem Sensorsignal S ein Steuersignal M für die Monitoreinrichtung 1 des Kraftfahrzeugs F, welches bewirkt, daß die vom optischen Sensor 11 erfaßte optische Information als eine zweidimensionale Bilddarstellung auf einer Darstellungsfläche 1' der Monitoreinrichtung 1 dargestellt wird.

In entsprechender Art und Weise wird von der Auswerteeinrichtung 20 die vom Abstandssensor 12 gelieferte Abstandsinformation verarbeitet ein entsprechendes Steuersignal M' erzeugt, das zu einer haptischen Anzeigeeinrichtung geleitet wird.

Als eine zuzätzliche Anzeigeeinrichtung wird in der Regel die Monitoreinrichtung 1 verwendet werden. Hierbei kann vorgesehen sein, daß das Steuersignal M' bewirkt, daß auf der Darstellungsfläche der Monitoreinrichtung 1. zahlenmäßig der Abstand des von dem Abstandssensor 12 erfaßten Objekts zur Darstellung gebracht wird.

Alternativ oder ergänzend zur Monitoreinrichtung 1 wird das Steuersignal M' zu als weitere Anzeigeeinrichtungen fungierenden fahrzeugintemen Signalquellen 13 geleitet, die ein ein optisches oder akustisches Warnsignal erzeugen, wenn z. B. zu einem erfaßten Objekt ein vorgegebener Mindestabstand unterschritten wird. Denkbar ist hier zum Beispiel eine Sprachausgabe. Außerdem ist es möglich, daß die vom Abstandssensor 12 gewonnenen und von der Auswerteeinrichtung 20 aufbereitete Abstandsinformationen zu weiteren Systemen einer Nahbereich-Sensorik des Kraftfahrzeugs F zur weiteren Verarbeitung geleitet werden.

Hierbei wird vorzugsweise derart vorgegangen, daß - wenn die Auswerteeinrichtung 20 festgestellt hat, daß ein vordefinierter Abstand eingehalten, überschriften oder unterschritten wurde - sie dem von ihr erzeugten Steuersignal eine entsprechende Kennung zufügt, welche bewirkt, daß durch die Monitoreinrichtung undloder durch eine der sonstigen optischen, akustischen oder haptischen Signalquellen 13 des Fahrzeugs F ein Warnsignal erzeugt wird.

Die Erfassung des Abstands durch den Abstandssensors 12 kann hierbei durch eine Vielzahl von Verfahren durchgeführt werden: Es ist möglich, daß die Abstandsinformation durch eine geometrische Auswertung der vom optischen Sensor 12 gelieferten Bildinformation erfolgt. In diesem Fall wird der Abstandssensor 12 im wesentlichen durch einen entsprechenden Verarbeitungsblock der Verarbeitungseinheit 20 realisiert. Es ist aber auch möglich, anstelle der Bildauswertung noch andere optische Verfahren z. B. ein interferometrisches Verfahren oder eine Laufzeitmessung (auf optischer oder akustischer Basis) oder ein Triangulationsverfahren zu verwenden oder daß Messungen durch Mikrowellen oder Ultraschall durchgeführt werden.

## Patentansprüche

1. Verfahren zur Überwachung eines Segments (SV) eines Verkehrsraums (R) eines Fahrzeugs (F), bei dem von einem optischen Sensor (11) das zu überwachende Segment (SV) des Verkehrsraums (R) erfaßt und ein die optische Information repräsentierendes Sensorsignal (SO) erzeugt und zu einer Auswerteeinrichtung (20) geleitet wird, bei dem die Auswerteeinrichtung (20) ein Steuersignal (M) für eine Monitoreinrichtung (1) des Fahrzeugs (F) erzeugt und zur Monitoreinrichtung (1) geleitet wird und bei dem auf einer Darstellungsfläche (1') der Monitoreinrichtung (1) eine flächenhafte Darstellung der vom optischen Sensor (12) gewonnen Information durchgeführt wird, **dadurch gekennzeichnet, daß** mittels eines Abstandssensors (12) der Abstand zu mindestens einem Objekt (O) des überwachten Segments (SV) des Verkehrsraums (R) ermittelt und ein diese Abstandsinformation charakterisierendes Sensorsignal (SA) zur Auswerteeinrichtung (20) geleitet wird, und daß durch die Auswerteeinrichtung (20) ein Sensorsignal ein die Abstandsinformation repräsentierendes Steuersignal (M') erzeugt und zu mindestens einer Anzeigeeinrichtung (1; 13) geleitet wird.

2. Verfahren nach Anspruch 1, **dadurch gekennzeichnet, daß** als Anzeigeeinrichtung die Monitoreinrichtung (1) verwendet wird, und daß auf der Darstellungsfläche (1') der Monitoreinrichtung (1) ein Abstandswert zur Anzeige gebracht wird.

3. Verfahren nach Anspruch 2, **dadurch gekennzeichnet, daß** die Abstandsinformation auf der Darstellungsfläche (1') der Monitoreinrichtung (1) numerisch angezeigt wird.

4. Verfahren nach einem der vorangehenden Ansprüche, **dadurch gekennzeichnet, daß** als die oder eine der Anzeigeeinrichtung, denen die Abstandsinformation repräsentierene Steuersignal (M') zugeleitet wird, eine weitere optische, eine akustische oder eine haptische Signalquelle (13) ist.

5. Verfahren nach einem der vorangehenden Ansprüche, **dadurch gekennzeichnet, daß** die Auswerteeinrichtung (20) das ihr zugeführte Sensorsignal (SA) des Abstandssensors (12) daraufhin untersucht, ob ein vordefiniertes Abstandskriterium oder vordefinierte Abstandskriterien erfüllt ist.

6. Verfahren nach Anspruch 5, **dadurch gekennzeichnet, daß** die Auswerteeinrichtung (20) das ihr zugeführte Sensorsignal (SA) des Abstandssensors (12) daraufhin untersucht, ob ein vordefinierter Abstand eingehalten, überschritten oder unterschritten ist, und daß die Auswerteeinrichtung (20) dann dem von ihr erzeugten Steuersignal (M') eine entsprechende Kennung zufügt, welche bewirkt, daß durch die Monitoreinrichtung (1) und/oder durch eine der sonstigen optischen, akustischen oder haptischen Signalquellen (13) ein Warnsignal erzeugt wird.

7. Verfahren nach einem der vorangehenden Ansprüche, **dadurch gekennzeichnet, daß** das Steuersignal (M') der Auswerteeinrichtung (20) einer Verarbeitungseinheit der Nahbereich-Sensorik des Fahrzeugs (F) zugeführt wird.

8. Verfahren nach einem der vorangehenden Ansprüche, **dadurch gekennzeichnet, daß** die Abstandsmessung durch ein optisches Verfahren erfolgt.

9. Verfahren nach Anspruch 8, **dadurch gekennzeichnet, daß** die Abstandsmessung durch eine Auswertung der vom optischen Sensor (11) gelieferten Bildinformation erfolgt.

## Claims

1. Method for monitoring a segment (SV) of a traffic space (R) of a vehicle (F) in which the segment (SV) of the vehicle space (R) which is to be monitored is sensed by an optical sensor (11) and a sensor signal (SO) which represents the optical information is generated and is fed to an evaluation device (20), in which method the evaluation device (20) generates a control signal (M) for a monitor device (1) of the vehicle (F) and feeds it to the monitor device (1), and in which method a planar representation of the information which is acquired by the optical sensor (12) is implemented on a display surface (1') of the monitor device (1), wherein the distance from at least one object (O) in the monitored segment (SV) of the traffic space (R) is determined by means of a distance sensor (12), and a sensor signal (SA) which characterizes this distance information is fed to the evaluation device (20), and wherein a control signal (M') which represents the distance information is generated by the evaluation device (20) from this sensor signal and is fed to at least one display device (1; 13), **characterized in that** the display device, or one of the display devices, to which the control signal (M') which represents the distance information is fed is a haptic signal source (13).

2. Method according to Claim 1, **characterized in that** the monitor device (1) is used as an additional display device, and **in that** a distance value is displayed on the display face (1') of the monitor device (1).

3. Method according to Claim 2, **characterized in that** the distance information is displayed numerically on the display face (1') of the monitor device (1).

4. Method according to one of the preceding claims, **characterized in that** the display device, or one of the display devices, to which the control signal (M') which represents the distance information is fed is a further optical or acoustic signal source (13).

5. Method according to one of the preceding claims, **characterized in that** the evaluation device (20) examines the sensor signal (SA) which is fed to it from the distance sensor (12) to determine whether a predefined distance criterion or predefined distance criteria is/are met.

6. Method according to Claim 5, **characterized in that** the evaluation device (20) examines the sensor signal (SA) which is fed to it from the distance sensor (12) to determine whether a predefined distance is complied with, exceeded or undershot, and **in that** the evaluation device (20) then adds a corresponding identifier to the control signal (M') which is generated by said evaluation device (20), which identifier causes the monitoring device (1) and/or one of the other optical, acoustic or haptic signal sources (13) to generate a warning signal.

7. Method according to one of the preceding claims, **characterized in that** the control signal (M') of the evaluation device (20) is fed to a processing unit of the close-range sensor system of the vehicle (F).

8. Method according to one of the preceding claims, **characterized in that** the distance measurement is carried out by means of an optical method.

9. Method according to Claim 8, **characterized in that** the distance measurement is carried out by means of an evaluation of the image information which is supplied by the optical sensor (11).

10. Method according to one of the preceding claims, **characterized in that** the distance measurement is carried out by means of interferometry, by means of a propagation time measurement, by means of a triangulation method, by means of microwaves, radar, infrared or ultrasound.

11. Device for carrying out the method according to one of the preceding claims, wherein the device comprises an optical sensor (12) for optically sensing a segment (SV) of a traffic space (R), and a distance sensor (12) for determining the distance from at least one object (10) in the monitored segment (SV) of the traffic space (R), and wherein the sensor signal (S) which is generated by the sensor device (10) can be fed to an evaluation device (20), by means of which a control signal (M, M') for at least one display device (1; 13) of the vehicle (F) can be generated, **characterized in that** the display comprises a haptic signal source (13).

## Revendications

1. Procédé de surveillance d'un segment (SV) d'un espace de circulation (R) d'un véhicule (F), dans lequel le segment (SV) de l'espace de circulation (R) à surveiller est détecté par un capteur optique (11) et un signal de capteur (SO) représentant l'information optique est produit et amené à un dispositif d'analyse (20), dans lequel le dispositif d'analyse (20) produit un signal de commande (M) pour un dispositif de contrôle (1) du véhicule (F) et le transmet au dispositif de contrôle (1), et dans lequel une représentation bidimensionnelle de l'information obtenue par le capteur optique (12) est réalisée sur une surface de représentation (1') du dispositif de contrôle (1), la distance à au moins un objet (O) du segment surveillé (SV) de l'espace de circulation (R) étant déterminée au moyen d'un capteur de distance (12) et un signal de capteur (SA) caractérisant cette information de distance étant amené au dispositif d'analyse (20), et un signal de commande (M') représentant l'information de distance étant produit à partir de ce signal de capteur par le dispositif d'analyse (20) et étant amené à au moins un dispositif d'affichage (1 ; 13), **caractérisé en ce que** le ou l'un des dispositifs d'affichage, auquel est amené le signal de commande (M') représentant l'information de distance, est une source de signaux (13) haptique.

2. Procédé selon la revendication 1, **caractérisé en ce que** l'on utilise comme dispositif d'affichage supplémentaire le dispositif de contrôle (1) et **en ce que** l'on affiche une valeur de distance sur la surface de représentation (1') du dispositif de' contrôle (1).

3. Procédé selon la revendication 2, **caractérisé en ce que** l'information de distance est affichée sous forme numérique sur la surface de représentation (1') du dispositif de contrôle (1).

4. Procédé selon l'une quelconque des revendications précédentes, **caractérisé en ce que** le ou l'un des dispositifs d'affichage, auquel est amené le signal de commande (M') représentant l'information de distance, est une autre source de signaux (13) optique ou acoustique.

5. Procédé selon l'une quelconque des revendications précédentes, **caractérisé en ce que** le dispositif d'analyse (20) analyse le signal de capteur (SA) qui lui a été envoyé par le capteur de distance (12) pour déterminer si un critère de distance prédéfini ou des critères de distance prédéfinis sont satisfaits.

6. Procédé selon la revendication 5, **caractérisé en ce que** le dispositif d'analyse (20) analyse le signal de capteur (SA) qui lui a été envoyé par le capteur de distance (12) pour déterminer si une distance prédéfinie est respectée, dépassée, ou non atteinte, et **en ce que** le dispositif d'analyse (20) ajoute alors au signal de commande (M') qu'il produit une valeur caractéristique correspondante qui fait en sorte qu'un signal d'avertissement soit produit par le dispositif de contrôle (1) et/ou par une autre source de signaux (13) optique, acoustique ou haptique.

7. Procédé selon l'une quelconque des revendications précédentes, **caractérisé en ce que** le signal de commande (M') du dispositif d'analyse (20) est amené à une unité de traitement du système de capteurs de proximité du véhicule (F).

8. Procédé selon l'une quelconque des revendications précédentes, **caractérisé en ce que** la mesure de distance est effectuée par un procédé optique.

9. Procédé selon la revendication 8, **caractérisé en ce que** la mesure de distance s'effectue par une analyse de l'information en image fournie par le capteur optique (11).

10. Procédé selon l'une quelconque des revendications précédentes, **caractérisé en ce que** la mesure de distance s'effectue par interféromètre, par une mesure du temps écoulé, par un procédé de triangulation, par des micro-ondes, par radar, par infrarouge ou par ultrasons.

11. Dispositif pour mettre en oeuvre le procédé selon l'une quelconque des revendications précédentes, dans lequel le dispositif présente un capteur optique (12) pour la détection optique d'un segment (SV) d'un espace de circulation (R) et un capteur de distance (12) pour déterminer la distance à au moins un objet (10) du segment surveillé (SV) de l'espace de circulation (R), et dans lequel le signal de capteur (S) produit par le dispositif de capteur (10) peut être envoyé à un dispositif d'analyse (20) qui peut produire un signal de commande (M, M') pour au moins un dispositif d'affichage (1 ; 13) du véhicule (F), **caractérisé en ce que** le dispositif d'affichage comprend une source de signaux (13) haptique.
